# NEUE EUROPÄISCHE PATENTSCHRIFT

(11) **EP 0 882 093 B2**
(45) Veröffentlichungstag und Bekanntmachung des Hinweises auf die Entscheidung über den Einspruch: **25.06.2008**
(45) Hinweis auf die Patenterteilung: 22.09.1999
(21) Anmeldenummer: 97905047.3
(22) Anmeldetag: 19.02.1997
(51) Int. Cl.: C08L 57/00, C08F 8/30, C08K 5/17, B27N 1/02, B05D 1/00

(54) **FORMALDEHYDFREIE BINDEMITTEL FÜR FORMKÖRPER**
FORMALDEHYDE-FREE BINDER FOR MOULDINGS
LIANT EXEMPT DE FORMALDEHYDE POUR OBJETS FA ONNES

(30) Priorität: 21.02.1996 DE 19606393
(43) Veröffentlichungstag der Anmeldung: 09.12.1998
(73) Patentinhaber: BASF SE, 67056 Ludwigshafen (DE)
(72) Erfinder: RECK, Bernd, D-67269 Grünstadt (DE); WISTUBA, Eckehardt, D-67098 Bad Dürkheim (DE); BECKERLE, Wilhelm, Friedrich, D-67240 Bobenheim-Roxheim (DE); KISTENMACHER, Axel, D-67098 Bad Dürkheim (DE); RUPANER, Robert, E-12500-000 Guaratingueta (ES); HUMMERICH, Rainer, D-67551 Worms (DE)
(86) Internationale Anmeldenummer: PCT/EP1997/000768
(87) Internationale Veröffentlichungsnummer: WO 1997/031059

(56) Entgegenhaltungen:
- EP-A- 0 445 578
- EP-A- 0 651 088
- DD-A- 247 456
- DE-A- 1 720 712
- DE-A- 2 214 450
- DE-A- 2 357 951
- DE-C- 864 151
- JP-A- 2 051 531
- JP-A- 51 132 295
- JP-A- 56 104 905
- NL-A- 7 407 556

## Beschreibung

Die Erfindung betrifft die Verwendung von formaldehydfreien Bindemitteln zur Herstellung von Formkörpern und Platten aus feinteiligen, nativen Materialien z.B. Holzspänen, Holzfasern, Sisalfasern, Jutefasern, Flachsfasern oder Korkschnitzeln.

Zur Herstellung von Formkörpern, z.B. Platten aus derartigen nachwachsenden Rohstoffen werden vielfach Formaldehyd-Kondensationsharze als Bindemittel eingesetzt. Nachteilig an diesen Bindemitteln ist die Emission von Formaldehyd sowohl bei der Herstellung der Platten und Formkörper als auch bei deren späteren Gebrauch.

Aus EP 445 578 sind Formkörper aus feinteiligen Materialien (u.a. auch Holzfasern) bekannt, in denen Kondensationsprodukten aus einem, wenigstens eine hochmolekulare Polycarbonsäure und wenigstens ein mehrwertiges Amin, Alkanolamin oder einen mehrwertigen Alkohol enthaltenden Gemisch, als Bindemittel verwendet werden. Als hochmolekulare Polycarbonsäuren werden Polyacrylsäure, Poly(Methylmethacrylat-co-n-Butylacrylat-co-Methacrylsäure) und Poly(Methylmethacrylat-co-Methacrylsäure) beschrieben. Als mehrwertige Alkohole bzw. Alkanolamine werden 2-Hydroxymethylbutandiol-1,4-Trimethylolpropan, Glycerin, Poly(Methylmethacrylat-co-Hydroxypropylacrylat), Diethanolamin und Triethanolamin eingesetzt. Maleinsäure wird als ein mögliches Comonomer zur Herstellung der hochmolekularen Polycarbonsäuren genannt, die Verwendung von maleinsäurehaltigen Copolymerisaten wird aber nicht näher beschrieben. Vorzugsweise werden α,β-ungesättigte Carbonsäuren verwendet. Die Verwendung von Triethanolamin als Vernetzer wird zwar in einem Beispiel genannt, aber nur in Kombination mit einer aus einer Emulsionspolymerisation hervorgehenden wäßrigen Dispersion eines Copolymeren aus Methylmethacrylat und Methacrylsäure.

Die Wasserfestigkeiten der in EP 445 578 beschriebenen Formkörper aus Holzfasern lassen jedoch sehr zu wünschen übrig.

Aus der EP 583 086 sind formaldehydfreie, wäßrige Bindemittel zur Herstellung mechanisch stabiler, wärmeresistenter Glasfaservliese bekannt. Die Bindemittel enthalten Polycarbonsäuren, Polyole und einen Phosphor-enthaltende Reaktionsbeschleuniger. Ein Einsatz der Bindemittel zur Bindung feinteiliger, nativer Materialien wird nicht erwähnt.

EP 651 088 betrifft die Verfestigung von Zellulose-Substraten, insbesondere Faservliesen, mit wäßrigen Zusammensetzungen aus Polycarbonsäuren, Polyolen und phosphorhaltigen Beschleunigern. Die Bindemittel enthalten notwendigerweise phosphorhaltige Verbindungen wie z.B. Natrium-hypophosphit monohydrat als Reaktionsbeschleuniger.

Die Herstellung von Formkörpern, insbesondere Spanplatten wird als mögliche Verwendung genannt; die Verwendung von Maleinsäure-bzw. Maleinsäureanhydrid enthaltenden Copolymerisaten zusammen mit Alkanolaminen für diesen Zweck wird jedoch nicht offenbart.

Aufgabe der vorliegenden Erfindung war, formaldehydfreie Bindemittel für die Herstellung von Platten und Formkörpern aus feinteiligen nativen Materialien zur Verfügung zu stellen, die eine hohe Reaktivität aufweisen.

Die damit hergestellten Formkörper und Platten sollen gute mechanische Eigenschaften, insbesondere eine niedrige Wasserquellbarkeit, aufweisen.

Demgemäß wurde die Verwendung eines formaldehydfreien, wäßrigen Bindemittels, enthaltend
A) ein durch radikalische Polymerisation erhaltenes Polymerisat, welches zu 5 bis 100 Gew.-% aus einem ethylenisch ungesättigten Säureanhydrid oder einer ethylenisch ungesättigten Dicarbonsäure, deren Carbonsäuregruppen eine Anhydridgruppe bilden können, besteht und
B) ein Alkanolamin mit mindestens zwei Hydroxylgruppen,
dadurch gekennzeichnet, daß das Bindemittel nach Trocknung (bei 50°C, Dauer 72 Stunden) zu einem Film der Dicke 0,3 bis 1 mm und anschließender 15-minütiger Härtung bei 130°C an der Luft einen Gelgehalt über 50 Gew.-% hat und das Bindemittel weniger als 1,5 Gew. %, (bezogen auf A) + B) eines Phosphor enthaltenden Reaktionsbeschleuniger enthält,
als Bindemittel für nachwachsende Rohstoffe in Form von Fasern, Schnitzel oder Späne zur Herstellung von Formkörpern gefunden.

Gefunden wurden auch Formkörper, die durch vorstehende Verwendung erhältlich sind.

Das wäßrige Bindemittel enthält ein Polymerisat A), welches zu 5 bis 100 Gew.-%, bevorzugt 5 bis 50 Gew.-%, besonders bevorzugt 10 bis 40 Gew.-% aus einem ethylenisch ungesättigten Säureanhydrid oder einer ethylenisch ungesättigten Dicarbonsäure, deren Carbonsäuregruppen eine Anhydridgruppe bilden können, aufgebaut ist (im folgenden Monomere a) genannt).

Als Säureanhydride sind Dicarbonsäureanhydride bevorzugt. Geeignete ethylenisch ungesättigte Dicarbonsäuren sind im allgemeinen solche mit Carbonsäuregruppen an benachbarten Kohlenstoffatomen. Die Carbonsäuregruppen können auch in Form ihrer Salze vorliegen.

Als Monomere a) werden bevorzugt Maleinsäure, Maleinsäureanhydrid, Itaconsäure, Narbornendicarbonsäure, 1,2,3,6-Tetrahydrophthalsäure, 1,2,3,6-Tetrahydrophthalsäureanhydrid, deren Alkali- und Ammoniumsalze oder Mischungen daraus. Besonders bevorzugt sind Maleinsäure und Maleinsäureanhydrid.

Neben Monomeren a) kann das Polymerisat noch Monomere b) enthalten.

Als Monomere b) können beispielsweise eingesetzt werden:

Monoethylenisch ungesättigte C₃- bis C₁₀-Monocarbonsäuren, (Monomere b₁), wie z.B. Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze.

Lineare 1-olefine, verzweigtkettige 1-olefine oder cyclische Olefine (Monomere b₂), wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-olefin, 1-Dodecen, C₁₂-C₁₄-olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten.

Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann (Monomere b₃), wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Acrylamide und alkylsubstituierte Acrylamide (Monomere b₄), wie z.B. Acrylamid, Methacrylamid, N-tert.-Butylacrylamid, N-Methyl(meth)acrylamid.

Sulfogruppenhaltige Monomere (Monomere b₅), wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.

C₁- bis C₈-Alkylester oder C₁- bis C₄-Hydroxyalkylescer der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit Acrylsäure, Methacrylsäure oder Maleinsäure (Monomere b₆), wie z.B. Methyl(meth)acrylat, Ethyl(meth)acrylat, Propyl(meth)acrylat, Isopropyl(meth) acrylat, Butyl(meth)acrylat, Hexyl(meth)acrylat, 2-Ethylhexyl (meth)acrylat, Hydroxyethyl(meth)acrylat, Hydroxypropyl(meth) acrylat, Butandiol-1,4-monoacrylat, Maleinsäuredibutylester, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-oxoalkohol bzw. deren Mischungen.

Alkylaminoalkyl(meth)acrylate oder Alkylaminoalkyl(meth)acrylamide oder deren Quaternisierungsprodukte (Monomere b₇), wie z.B. 2-(N,N-Dimethylamino)ethyl(meth)acrylat, 3-(N,N-Dimethylamino)propyl(meth)acrylat, 2-(N,N,N-Trimethylammonium)ethyl (meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid.

Vinyl- und Allylester von C₁- bis C₃₀-Monocarbonsäuren (Monomere b₈), wie z.B. Vinylformiat, Vinylacetat, Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat.

Als weitere Monomere b₉ seien noch genannt:

N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Das Polymerisat kann neben Monomeren a) noch 0 bis 95 Gew.-% Monomere b enthalten. Bevorzugt enthält das Polymerisat neben Monomeren a) noch Monomere b in Mengen von 50 bis 95, besonders bevorzugt von 60 bis 90 Gew.-%.

Bevorzugte Monomere sind Acrylsäure, Methacrylsäure, Ethen, tropen, Buten, Isobuten, Cyclopenten, Methylvinylether, Ethylvinylether, Acrylamid, 2-Acrylamido-2-methylpropansulfonsäure, Vinylacetat, Styrol, Butadien, Acrylnitril bzw. Mischungen davon.

Besonders bevorzugt sind Acrylsäure, Methacrylsäure, Ethen, Acrylamid, Styrol und Acrylnitril bzw. Mischungen davon.

Ganz besonders bevorzugt sind Acrylsäure, Methacrylsäure und Acrylamid bzw. Mischungen davon.

Die Polymerisate können nach üblichen Polymerisationsverfahren hergestellt werden, z.B. durch Substanz-, Emulsions-, Suspensions-, Dispersions-, Fällungs- und Lösungspolymerisation. Bei den genannten Polymerisationsverfahren wird bevorzugt unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter. Bevorzugt wird nach der Methode der Lösungs-, Emulsions-, Fällungs- oder Suspensionspolymerisation gearbeitet. Besonders bevorzugt sind die Methoden der Lösungs- und Emulsionspolymerisation. Die Polymerisation kann in Lösungs- oder Verdünnungsmitteln, wie z.B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, tert.-Butylmethylether, Essigsäuremethylester, Isopropanol, Ethanol, Wasser oder Mischungen wie z.B. Isopropanol/Wasser-Mischungen ausgeführt werden. Vorzugsweise wird als Lösungs- oder Verdünnungsmittel Wasser gegebenenfalls mit Anteilen bis zu 60 Gew.-% an Alkoholen oder Glykolen verwendet. Besonders bevorzugt wird Wasser eingesetzt.

Die Polymerisation kann bei Temperaturen von 20 bis 300, vorzugsweise von 60 bis 200°C durchgeführt werden. Je nach Wahl der Polymerisationsbedingungen lassen sich gewichtsmittlere Molekulargewichte z.B. von 800 bis 5 000 000, insbesondere von 1 000 bis 1 000 000 einstellen. Bevorzugt liegen die gewichtsmittleren Molekulargewichte M_{w} im Bereich von 2000 bis 400 000. M_{w} wird bestimmt durch Gelpermeationschromatographie.

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z.B. Redox-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxidisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z.B. Mischungen aus Wasserstoffperoxid und Natriumperoxidisulfat. Für die Polymerisation in wäßrigem Medium werden bevorzugt wasserlösliche Initiatoren eingesetzt.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z.B. reduzierend wirkenden Schwefelverbindungen, beispielsweise Bisulfite, Sulfite, Thiosulfate, Dithionite und Tetrathionate von Alkalimetallen und Ammoniumverbindungen. So kann man Kombinationen von Peroxodisulfaten mit Alkalimetall- oder Ammoniumhydrogensulfiten einsetzen, z.B. Ammoniumperoxidisulfat und Ammoniumdisulfit. Die Menge der peroxidhaltigen Verbindung zum Redox-Coinitiator beträgt 30:1 bis 0,05:1.

In Kombination mit den Initiatoren bzw. den Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salz sind z.B. Eisen-II-sulfat, Kobalt-II-chlorid, Nickel-II-sulfat, Kupfer-I-chlorid. Bezogen auf Monomeren wird das reduzierend wirkende Übergangsmetallsalz in einer Konzentration von 0,1 ppm bis 1 000 ppm eingesetzt. So kann man Kombinationen von Wasserstoffperoxid mit Eisen-II-Salzen einsetzen, wie beispielsweise 0,5 bis 30 % Wasserstoffperoxid und 0,1 bis 500 ppm Mohrsches Salz.

Auch bei der Polymerisation in organischen Lösungsmitteln können in Kombination mit den obengenannten Initiatoren Redox-Coinitiatoren und/oder Übergangsmetallkatalysatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an Redox-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C₁- bis C₄-Aldehyde, wie Formaldehyd, Acetaldehyd, Propionaldehyd, Hydroxylammoniumsalze wie Hydroxylammoniumsulfat, Ameisensäure, Natriumbisulfit oder Isopropanol. Die Polymerisationsregler werden im allgemeinen in Mengen von 0,1 bis 10 Gew.-%, bezogen auf die Monomeren eingesetzt. Auch durch die Wahl des geeigneten Lösungsmittels kann auf das mittlere Molekulargewicht Einfluß genommen werden. So führt die Polymerisation in Gegenwart von Verdünnungsmitteln mit benzylischen H-Atomen zu einer Verringerung des mittleren Molekulargewichtes durch Kettenübertragung.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäureund Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Polyethylenglykole bzw. Polypropylenglykole, die für die Herstellung der Diacrylate oder Dimethacrylate verwendet werden, haben vorzugsweise ein Molekulargewicht von jeweils 400 bis 2 000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensions-oder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Die Emulgatoren oder Schutzkolloide werden üblicherweise in Konzentrationen von 0,05 bis 20 Gew.-%, bezogen auf die Monomere, eingesetzt.

Wird in wäßriger Lösung oder Verdünnung polymerisiert, so können die Monomere vor oder während der Polymerisation ganz oder teilweise durch Basen neutralisiert werden. Als Basen kommen beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2-Ethoxyethylamin, 3-Ethoxypropylamin, Dimethylethanolamin, Diisopropanolamin oder Morpholin in Frage.

Weiterhin können auch mehrbasische Amine zur Neutralisation eingesetzt werden, wie z.B. Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin.

Vorzugsweise werden zur partiellen oder vollständigen Neutralisation der ethylenische ungesättigten Carbonsäuren vor oder während der Polymerisation Ammoniak, Triethanolamin und Diethanolamin eingesetzt.

Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen vom Alkanolamin B), zugesetzt. Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z.B. Regler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf.

Wird das Polymerisat nach dem Verfahren einer Lösungspolymerisation in Wasser gewonnen, so ist üblicherweise keine Abtrennung des Lösungsmittels notwendig. Besteht dennoch der Wunsch, das Polymerisat zu isolieren, kann z.B. eine Sprühtrocknung durchgeführt werden.

Wird das Polymerisat nach der Methode einer Lösungs-, Fällungsoder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wäßrigen Lösung oder Dispersion zu gelangen. Das Polymerisat kann von dem organischen Verdünnungsmittel auch durch einen Trocknungsprozeß abgetrennt werden.

Bevorzugt liegen die Polymerisate A) in Form einer wäßrigen Dispersion oder Lösung mit Feststoffgehalten von vorzugsweise 10 bis 80 Gew.-%, insbesondere 40 bis 65 Gew.-% vor.

Polymerisat A) kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE 4 003 172 und EP 116 930 beschrieben.

Als Komponente B) werden Alkanolamine mit mindestens zwei OH-Gruppen eingesetzt. Bevorzugt sind Alkanolamine der Formel 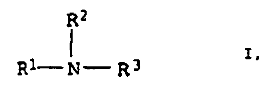 in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

Besonders bevorzugt stehen R² und R³ unabhängig voneinander für eine C₂-C₅-Hydroxyalkylgruppe und R¹ für ein H-Atom, eine C₁-C₅-Alkylgruppe oder eine C₂-C₅-Hydroxyalkylgruppe.

Als Verbindungen der Formel I seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Zur Herstellung der formaldehydfreien Bindemittel werden das Polymerisat A) und das Alkanolamin B) bevorzugt in einem solchen Verhältnis zueinander eingesetzt, daß das Molverhältnis von Carboxylgruppen der Komponente A) und der Hydroxylgruppen der Komponente B) 20:1 bis 1:1, bevorzugt 8:1 bis 5:1 und besonders bevorzugt 5:1 bis 1,7:1 beträgt (die Anhydridgruppen werden hierbei als 2 Carboxylgruppen berechnet).

Die Herstellung der formaldehydfreien, wäßrigen Bindemittel erfolgt z.B. einfach durch Zugabe des Alkanolamins zur wäßrigen Dispersion oder Lösung der Polymerisate A).

Die Bindemittel enthalten weniger als 1,5 Gew.-%, insbesondere weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus A) + B) eines Phosphor enthaltenden Reaktionsbeschleunigers. Phosphor enthaltende Reaktionsbeschleuniger sind in US 651 088 und US 583 086 genannt. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die Bindemittel enthalten vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können einen Veresterungskatalysator enthalten, wie z.B. Schwefelsäure oder p-Toluolsulfonsäure der Titanate oder Zirkonate. Die erfindungsgemäßen Bindemittel können als Imprägnierungsmittel oder Beschichtungsmittel Verwendung finden. Die erfindungsgemäßen Bindemittel können einziger Bestandteil der Imprägnierungsmittel oder Beschichtungsmittel sein. Die Imprägnierungsmittel oder Beschichtungsmittel können jedoch auch noch weitere für die jeweilig beabsichtigte Verwendung geeignete Zusatzstoffe enthalten. In Betracht kommen z.B. Farbstoffe, Pigmente, Biozide, Hydrophobierungsmittel, Netzmittel, Plastifizierungsmittel, Verdickungsmittel, Haftverbesserer, Reduktionsmittel und Umesterungskatalysatoren.

Die erfindungsgemäßen Bindemittel haben nach Trocknung (bei 50°C, Dauer 72 Stunden) zu einem Film der Dicke 0,3 bis 1 mm und anschließender 15 minütiger Härtung bei 130°C an der Luft vorzugsweise einen Gelgehalt über 50 Gew.-%, besonders bevorzugt über 60 Gew.-% und ganz besonders bevorzugt über 70 Gew.-%.

Nach Abschluß der Härtung werden die gehärteten Filme 48 Stunden in Wasser bei 23°C gelagert. Lösliche Anteile verbleiben dabei im Wasser. Der Film wird dann bei 50°C bis zur Gewichtskonstanz getrocknet und gewogen. Das Gewicht entspricht dem Gelgehalt in Gew.-%, bezogen auf das Gewicht vor Abtrennung der flüchtigen Anteile Gewichtskonstanz ist erreicht, wenn über die Gewichtsabnahme über einen Zeitraum von 3 Stunden weniger als 0,5 insbesondere weniger als 0,1 Gew.-% beträgt.

Die Bindemittel werden für die Herstellung von Formkörpern aus Fasern, Schnitzeln oder Spänen verwendet und können weitere Zusatzstoffe z.B. Insektizide, Fungizide oder Füllstoffe, Hydrophobierungsmittel, wie Silikonöle, Paraffine, Wachse, Fettseifen, Wasserretentionsmittel, Netzmittel, Flammschutzmittel, wie Borate und Aluminiumhydroxyd enthalten. Bei den Schnitzeln, Spänen oder Fasern kann es sich um solche aus nachwachsenden Rohstoffen oder um synthetische oder natürliche Fasern, z.B. aus Kleiderabfällen handeln. Als nachwachsende Rohstoffe seien insbesondere Sisal, Jute, Flachs, Kokosfasern, Bananenfasern, Hanf und Kork genannt. Besonders bevorzugt sind Holzfasern oder Holzspäne.

Die Formkörper haben bevorzugt eine Dichte von 0,4 bis 1,0 g/cm³ bei 23°C.

Als Formkörper kommen Platten in Betracht. Die Dicke der Platten beträgt im allgemeinen mindestens 1 mm, vorzugsweise mindestens 2 mm. In Betracht kommen auch Automobilinnenteile, z.B. Turinnenverkleidungen, Armaturenträger, Hutablagen.

Die Gewichtsmenge des verwendeten Bindemittels beträgt im allgemeinen 0,5 bis 40 Gew.-%, vorzugsweise 1 bis 15 Gew.-% (Bindemittel fest, berechnet als Summe A) + B)), bezogen auf die Fasern, Schnitzel und Späne.

Die Fasern, Schnitzel oder Späne können direkt mit dem Bindemittel beschichtet werden oder mit den wäßrigen Bindemittel gemischt werden. Die Viskosität des wäßrigen Bindemittels wird vorzugsweise (insbesondere bei der Herstellung von Formkörpern aus Holzfasern oder Holzspänen) auf 10 bis 10 000, besonders bevorzugt auf 50 bis 1 500 und ganz besonders bevorzugt auf 100 bis 1 000 mPa·s (DIN 53019, Rotationsviskosimeter bei 41 sec⁻¹) eingestellt.

Die Mischung aus Fasern, Schnitzeln und Spänen und dem Bindemittel kann z.B. bei Temperaturen von 10 bis 150°C vorgetrocknet werden und anschließend zu den Formkörpern, z.B. bei Temperaturen von 50 bis 300°C, vorzugsweise 100 bis 250°C und besonders bevorzugt 140 bis 225°C und Drücken von im allgemeinen 2 bis 1000 bar, vorzugsweise 10 bis 750 bar, besonders bevorzugt 50 bis 500 bar zu den Formkörpern verpreßt werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz wie z.B. Holzspänen und Holzfasern hergestellt werden können. Die Wasserfestigkeit von Holzwerkstoffen kann erhöht werden, indem man dem Bindemittel eine handelsübliche wäßrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spandicke im Mittel bei 0,1 bis 2 mm, insbesondere 0,2 bis 0,5 mm liegt, und die weniger als 6 Gew.-% Wasser enthalten. Das Bindemittel wird möglichst gleichmäßig auf die Holzspäne aufgetragen, wobei das Gewichts-Verhältnis Bindemittel:Holzspäne bezogen auf den Feststoff (berechnet als A) + B)) vorzugsweise 0,02:1 bis 0,3:1 beträgt. Eine gleichmäßige Verteilung läßt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250°C, bevorzugt von 140 bis 225°C durch Anwendung von Drücken von üblicherweise 10 bis 750 bar zu einer maßhaltigen Platte verpreßt. Die benötigten Preßzeiten können in einem weiten Bereich variieren und liegen im allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180°C hergestellt werden.

Zur Beleimung werden die Holzfasern im allgemeinen mit einem Luftstrom aufgewirbelt und das Bindemittel in den so erzeugten Fasernstrom eingedüst ("Blow-Line" Verfahren). Das Verhältnis Holzfasern zu Bindemittel bezogen auf den Trockengehalt bzw. Feststoffgehalt beträgt üblicherweise 40:1 bis 3:1, bevorzugt 20:1 bis 4:1. Die beleimten Fasern werden in dem Fasernstrom bei Temperaturen von z.B. 130 bis 180°C getrocknet, zu einem Faservlies ausgestreut und bei Drücken von 20 bis 40 bar zu Platten oder Formkörpern verpreßt.

Die beleimten Holzfasern können auch, wie z.B. in DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z.B. Türinnenverkleidungen von Kraftfahrzeugen weiterverarbeitet werden.

Die erfindungsgemäßen Bindemittel eignen sich weiterhin zur Herstellung von Sperrholz- und Tischlerplatten nach den allgemein bekannten Herstellverfahren.

Auch andere Naturfaserstoffe wie Sisal, Jute, Hanf, Flachs, Kokosfasern, Bananenfasern und ander Naturfasern können mit den Bindemitteln zu Platten und Formkörpern verarbeitet werden. Die Naturfaserstoffe können auch in Mischungen mit Kunststoffasern, z.B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den erfindungsgemäßen Bindemitteln imprägniert werden, gegebenenfalls unter Zusatz eines Benenzungshilfsmittels. Die imprägnierten Matten werden dann im bindemittelfeuchten oder vorgetrockneten Zustand z.B. bei Temperaturen zwischen 100 und 250°C und Drücken zwischen 10 und 100 bar zu Platten oder Formteilen verpreßt.

Die erfindungsgemäß erhaltenen Formkörper haben eine geringe Wasseraufnahme, eine niedrige Dickenquellung nach Wasserlagerung, eine gute Festigkeit und sind formaldehydfrei.

### Beispiele

### Abkürzungen: AS = Acrylsäure, MS = Maleinsäure

### Bindemittel A:

200 g einer wäßrigen Lösung eines Copolymerisates aus 80 AS/20 MS (Feststoffgehalt 44,5 %, pH 0,8; M_{w} 160 000) werden gemischt mit 27 g Triethanolamin
pH-Wert: 3,4
Viskosität: 9 000 mPa·s (bei 250 sec⁻¹ im Contraves Theomat, DIN-Meßsystem 108)
Aktive Inhaltsstoffe: 52,4 Gew.-% (aktive Inhaltsstoffe sind alle Inhaltsstoffe außer Wasser)

### Gelanteil:

Von der Mischung wird eine derart berechnete Menge in eine Silikonform (15 x 7 x 0,5 cm) gegossen und bei 50°C (72 Stunden) getrocknet, so daß die Dicke des entstehenden Filmes zwischen ca. 0,3 und 0,7 mm liegt.

Etwa 1 g des so hergestellten Films werden 15 min bei 130°C an der Luft gehärtet. Der gehärtete Film wird 48 h in destilliertem Wasser bei 23°C gelagert.

Aus dem Gewicht des wassergelagerten Films nach Rücktrockung bis zur Gewichtskonstanz im Verhältnis zum ursprünglichen Gewicht des Films wird der Gelanteil berechnet. Er beträgt im vorliegenden Beispiel 89 %.

### Bindemittel B:

200 g einer wäßrigen Lösung eines Copolymerisates aus 80 AS/20 MS (Feststoffgehalt 44,5 %, pH 0,8; M_{w} 160 000) werden gemischt mit 18 g Triethanolamin
pH-Wert: 3,0
Viskosität: 7 900 mPa·s (bei 250 sec⁻¹ im Contraves Rheomat, DIN-Meßsystem 108)
Aktive Inhaltsstoffe: 49 Gew.-%
Gelanteil: 83 %

### Bindemittel C:

200 g einer wäßrigen Lösung eines Copolymerisates aus 55 AS/45 MS (Feststoffgehalt 50,0 %, pH 0,8; M_{w} 3 000) werden gemischt mit 30 g Triethanolamin
pH-Wert: 3,4
Viskosität: 580 mPa·s
Aktive Inhaltsstoffe: 58,8 Gew.-%
Gelanteil: 55 %

### Bindemittel D:

Es wird eine Mischung hergestellt aus 8 g Polyacrylsäure (K-Wert des Na-Salzes in Wasser bei 25°C = 110), 3 g 2-Hydroxymethylbutandiol-1,4 und 40 g Wasser
pH-Wert: 1,9
Viskosität: 130 mPa·s
Aktive Inhaltsstoffe: 22 Gew.-%

### Bindemittel E

Aus 100 g Polyacrylsäure (Mw = 10 000, Neutralisationsgrad 25 %, NaOH), 10 g Triethanolamin und 5 g Natriumhypophosphit wird eine 40 %ige wäßrige Lösung hergestellt.
pH: 4,5
Viskosität: 130 mPas
Aktive Inhaltsstoffe: 40 Gew.-%
Gelanteil: 0 %

### Bindemittel F (entspricht Beispiel 9 Probe 24 aus EP 651 088):

Aus 100 g eines Poly(acrylsäure/maleinsäure)copolymers 55 AS/28 MS, hergestellt in Gegenwart von 17 Gew.-% Na-hypophosphit als Kettenträger (25 mol-% NaOH Neutralisation) und 17 g Triethanolamin wird eine wäßrige Lösung hergestellt.
pH-Wert: 4,7
Viskosität: 44 mPas
Aktive Inhaltsstoffe: 45 Gew.-%
Gelanteil: 0 %

### Herstellung der Spanplatten:

In einem Taumelmischer werden zu 100 g Holzspänen innerhalb von 1 min soviel von der angegebenen Bindemittellösung zugegeben, daß der Gewichtsanteil der aktiven Inhaltsstoffe des Bindemittels bezogen auf das Trockengewicht der Holzspäne 10 % beträgt.

Nach einer Mischzeit von 2 min werden die mit Bindemittel imprägnierten Holzspäne in eine 20 x 20 cm große Preßform gestreut und vorverdichtet. Anschließend werden die Späne 10 min mit einer Laborpresse bei einem Preßdruck von 50 bar und einer Pressentemperatur von 190°C zu einer Spanplatte mit einer Dichte von ca. 0,6 bis 0,9 g/cm³ und einer Dicke zwischen 6 und 8 mm verpreßt.

### Prüfung der Spanplatten:

Die Biegefestigkeit der Spanplatten wird gemäß DIN 52362 bestimmt.

### Wasseraufnahme:

Prüfkörper der Größe 2,5x2,5 cm werden 24 h bei 23°C in Wasser gelagert. Durch Auswiegen der Platten nach Abtupfen des oberflächlich anhängenden Wassers wird die prozentuale Gewichtszunahme der Platten bestimmt.

### Dickenquellung:

Ebenso wird die prozentuale Zunahme der Plattendicke infolge der Wasserlagerung mittels einer Schieblehre bestimmt.

| Prüfergebnisse | | | | |
|---|---|---|---|---|
| Bindemittel | Anwendungskonzentration, aktive Inhaltststoffe | Biegefestigkeit | Wasseraufnahme | Dickenquellung |
| | Gew.-% | N/mm² | % | % |
| A | 45 | 24 | 38 | 27 |
| B | 45 | 22 | 33 | 25 |
| C | 45 | 23 | 46 | 25 |
| D* | 22 | 21 | 67 | 30 |
| E* | 20 | 21 | 110 | 50 |
| F* | 45 | 17 | 105 | 56 |

| | | | | |
|---|---|---|---|---|
| * zum Vergleich | | | | |

## Patentansprüche

1. Verwendung eines formaldehydfreien, wäßrigen Bindemittels, enthaltend
A) ein durch radikalische Polymerisation erhaltenes Polymerisat, welches zu 5 bis 100 Gew.-% aus einem ethylenisch ungesättigten Säureanhydrid oder einer ethylenisch ungesättigten Dicarbonsäure, deren Carbonsäuregruppen eine Anhydridgruppe bilden können, besteht und
B) ein Alkanolamin mit mindestens zwei Hydroxylgruppen,
als Bindemittel für Fasern, Schnitzel oder Späne zur Herstellung von Formkörpern, **dadurch gekennzeichnet, daß** das Bindemittel nach Trocknung (bei 50°C, Dauer 72 Stunden) zu einem Film der Dicke 0,3 bis 1 mm und anschließender 15-minütiger Härtung bei 130°C an der Luft einen Gelgehalt über 50 Gew.-% hat und das Bindemittel weniger als 1,5 Gew. %, (bezogen auf A) + B) eines Phosphor enthaltenden Reaktionsbeschleuniger enthält.

2. Verwendung gemäß Anspruch 1, **dadurch gekennzeichnet, dass** die Fasern, Schnitzel oder Späne aus nachwachsenden Rohstoffen bestehen.

3. Verwendung gemäß Anspruch 1 oder 2, **dadurch gekennzeichnet, dass** es sich bei den Fasern um natürliche oder synthetische Fasern handelt.

4. Verwendung gemäß einem der Ansprüche 1 bis 3, **dadurch gekennzeichnet, dass** es sich um Holzfasern oder Holzspäne handelt.

5. Verwendung gemäß einem der Ansprüche 1 bis 4, **dadurch gekennzeichnet, dass** es sich Formkörper mit einer Mindestdicke von 1 mm handelt.

6. Verwendung gemäß einem der Ansprüche 1 bis 5, **dadurch gekennzeichnet, dass** es sich Holzspanplatten handelt.

7. Verwendung gemäß einem der Ansprüche 1 bis 6, **dadurch gekennzeichnet, dass** die Gewichtsmenge des Bindemittels (berechnet als Gewichtssumme aus A) und B) von 0,5 bis 40 Gew. %, bezogen auf die fasern, Schnitzel oder Späne beträgt.

8. Verwendung gemäß einem der Ansprüche 1 bis 7, **dadurch gekennzeichnet, dass** das Polymerisat A) zu 5 bis 100 Gew.-% aus Maleinsäure oder Maleinsäureanhydrid aufgebaut ist.

9. Verwendung gemäß einem der Ansprüche 1 bis 8, **dadurch gekennzeichnet, dass** es sich bei dem Alkanolamin um eine Verbindung 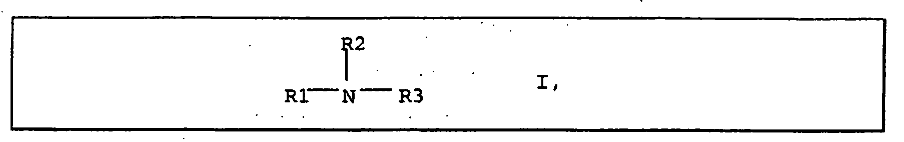 handelt, in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

10. Verwendung gemäß einem der Ansprüche 1 bis 9, **dadurch gekennzeichnet, dass** es sich bei dem Alkanolamin um Triethanolamin handelt.

11. Verwendung gemäß einem der Ansprüche 1 bis 10, **dadurch gekennzeichnet, dass** das Molverhältnis der Carboxylgruppen und Säureanhydridgruppen (1 Säureanhydridgruppe berechnet als 2 Carboxylgruppen) von A) zu den Hydroxylgruppen von B) 20:1 bis 1:1 beträgt.

12. Verfahren zur Herstellung von Formkörpern, **dadurch gekennzeichnet, dass** ein Bindemittel gemäß einem der Ansprüche 1 bis 11 als Bindemittel für Form von Fasern, Schnitzel oder Späne verwendet wird.

13. Verfahren gemäß Anspruch 12, **dadurch gekennzeichnet, dass** die fasern, Schnitzel oder Späne mit dem Bindemittel beschichtet oder gemischt werden und bei Temperaturen zwischen 50 und 300°C und Drücken zwischen 2 und 1000 bar zu den Formkörpern verpresst werden.

## Claims

1. The use of a formaldehyde-free aqueous binder comprising
A) a free-radically polymerized polymer comprising from 5 to 100% by weight of units derived from an ethylenically unsaturated acid anhydride or from an ethylenically unsaturated dicarboxylic acid whose carboxyl groups can form an anhydride group, and
B) an alkanolamine having at least two hydroxyl groups,
as a binder for fibers or chips to produce shaped articles, which dries at 50°C in 72 hours to a film from 0.3 to 1 mm in thickness and, following a subsequent 15 minutes' cure at 130°C in air, has a gel content of above 50% by weight, and the binder comprises less than 1.5% by weight (based on A) + B) of a phosphorus-containing reaction accelerant.

2. The use according to claim 1, wherein the fibers or chips consist of renewable raw materials.

3. The use according to claim 1 or 2, wherein the fibers are natural or synthetic fibers.

4. The use according to any of claims 1 to 3, wherein the fibers or chips are of wood.

5. The use according to any of claims 1 to 4, wherein the shaped articles have a minimum thickness of 1 mm.

6. The use according to any of claims 1 to 5, wherein the shaped articles are woodbase chipboards.

7. The use according to any of claims 1 to 6, wherein the weight of binder (calculated as total weight of A) and B)) is from 0.5 to 40% by weight, based on the fibers or chips.

8. The use according to any of claims 1 to 7, wherein polymer A) comprises from 5 to 100% by weight of units derived from maleic acid or maleic anhydride.

9. The use according to any of claims 1 to 8, wherein the alkanolamine is a compound 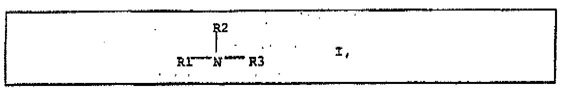 where R¹ is hydrogen, C₁-C₁₀alkyl or C₁-C₁₀-hydroxyalkyl and R² and R³ are each C₁-C₁₀-hydroxyalkyl.

10. The use according to any of claims 1 to 9, wherein the alkanolamine is triethanolamine.

11. The use according to any of claims 1 to 10, wherein the molar ratio of the carboxyl groups and anhydride groups (1 anhydride group calculated as 2 carboxyl groups) of A) to the hydroxyl groups of B) is within the range from 20:1 to 1:1.

12. A process for producing shaped articles, which comprises using a binder according to any of claims 1 to 11 as binder for fibers or chips.

13. The process according to claim 12, wherein the fibers or chips are coated or mixed with the binder and pressed at temperatures within the range from 50 to 300°C and pressures within the range from 2 to 1000 bar to form shaped articles.

## Revendications

1. Utilisation d'un liant aqueux exempt de formaldéhyde, contenant :
A) un polymère obtenu par polymérisation radicalaire, lequel se compose de 5 à 100 % en poids d'un anhydride d'acide à insaturation éthylénique ou d'un acide dicarboxylique à insaturation éthylénique, dont les groupements acide carboxylique peuvent former un groupement anhydride, et
B) une alcanolamine ayant au moins deux groupements hydroxyle,
comme liant pour des fibres, des rognures ou des copeaux dans le but de fabriquer des corps de moulage, **caractérisée en ce que** le liant présente, une fois qu'il a été séché (à 50 °C sur une durée de 72 heures) pour former un film d'une épaisseur de 0,3 à 1 mm, puis durci sur une période de 15 minutes à 130°C à l'air, une teneur en gel supérieure à 50% en poids, et **en ce que** le liant comprend moins de 1,5% en poids (par rapport à A) + B)) d'un accélérateur de réaction contenant du phosphore.

2. Utilisation selon la revendication 1, **caractérisé en ce que** les fibres, les rognures ou les copeaux sont constitués de matières premières renouvelables.

3. Utilisation selon la revendication 1 ou 2, **caractérisée en ce que** les fibres sont des fibres naturelles ou synthétiques.

4. Utilisation selon l'une quelconque des revendications 1 à 3, **caractérisée en ce qu'**il s'agit de fibres de bois ou de copeaux de bois.

5. Utilisation selon l'une quelconque des revendications 1 à 4, **caractérisée en ce qu'**il s'agit de corps de moulage ayant une épaisseur minimale de 1 mm.

6. Utilisation selon l'une quelconque des revendications 1 à 5, **caractérisée en ce qu'**il s'agit de panneaux de particules.

7. Utilisation selon l'une quelconque des revendications 1 à 6, **caractérisée en ce que** la quantité en poids du liant (calculée comme la somme des poids du composant A) et du composant B)) représente 0,5 à 40% en poids par rapport au fibres, aux rognures ou aux copeaux.

8. Utilisation selon l'une quelconque des revendications 1 à 7, **caractérisée en ce que** le polymère A) est constitué de 5 à 100 % en poids d'acide maléique ou d'anhydride d'acide maléique.

9. Utilisation selon l'une quelconque des revendications 1 à 8, **caractérisée en ce que** l'alcanolamine est représentée par le composé suivant : 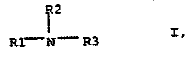 dans lequel R¹ représente un atome d'hydrogène, un groupement alkyle en C₁-C₁₀ ou un groupement hydroxyalkyle en C₁-C₁₀ et R² et R³ représentent un groupement hydroxyalkyle en C₁-C₁₀.

10. Utilisation selon l'une quelconque des revendications 1 à 9, **caractérisée en ce que** l'alcanolamine est la triéthanolamine.

11. Utilisation selon l'une quelconque des revendications 1 à 10, **caractérisée en ce que** le rapport molaire des groupements carboxyle et des groupements anhydride d'acide (1 groupement anhydride d'acide se calculant comme 2 groupements carboxyle) du composant A) aux groupements hydroxyle du composant B) est de 20:1 à 1:1.

12. Procédé de fabrication de corps de moulage, **caractérisé en ce que** l'on utilise un liant selon l'une quelconque des revendications 1 à 11 comme liant pour le moulage de fibres, de rognures ou de copeaux.

13. Procédé selon la revendication 12, **caractérisé en ce que** les fibres, les rognures ou les copeaux sont revêtus du liant ou sont mélangés à ce dernier, et sont comprimés à des températures comprises entre 50 et 300°C et à des pressions comprises entre 2 et 1000 bars pour donner les corps de moulage.
